# EUROPEAN PATENT APPLICATION

(11) **EP 4 528 664 A1**
(43) Date of publication of application: **26.03.2025**
(21) Application number: 23198834.6
(22) Date of filing: 21.09.2023
(51) Int. Cl.: G06V 10/44, G06V 10/774, G06V 10/776, G06V 10/82, G06V 20/20, G06V 20/56

(54) **METHOD FOR FINDING SYSTEMATIC ERRORS OF AN IMAGE-BASED OBJECT DETECTOR**

(71) Applicant: Robert Bosch GmbH, 70442 Stuttgart (DE)
(72) Inventor: Hein, Matthias, 72076 Tübingen (DE); Boreiko, Valentyn, 72074 Tuebingen (DE); Metzen, Jan Hendrik, 71034 Boeblingen (DE)

(57) **Abstract**

Computer-implemented method for determining systematic errors of an image-based object detector comprising the steps of:
• Determining (901) a first image of an object from a plurality of objects;
• Determining (902) edges of the object or a pose of the object;
• Determining (903) a at least one visual attribute out of a set of possible visual attributes of the object to be tested for systematic errors;
• Generating (904), by a generative machine learning system, a second image using the at least one visual attribute as or in a prompt of the generative machine learning system thereby generating an image of the object exhibiting the at least one visual attribute, wherein the generative machine learning system is additionally conditioned on the determined edges or the pose of the object;
• Placing (906) the object from the second image into an image of a background scene thereby generating a third image;
• Evaluating (907) the object detector on the third image and using the evaluation for determining systematic errors of the object detector.

## Description

### Technical field

The invention concerns a computer-implemented method for finding systematic errors of an image-based object detector, a method for training an object detector, a computer program, and a machine-readable storage device.

### Prior art

Zhang et al. "Adding Conditional Control to Text-to-Image Diffusion Models", 10.02.2023, https://arxiv.org/abs/2302.05543 discloses the ControlNet neural network for image generation.

Kirillov et al. "Segment Anything", 05.04.2023, https://arxiv.org/abs/2304.02643 discloses the Segment Anything algorithm for image segmentation.

Liu et al. "Zero-1 -to-3: Zero-shot One Image to 3D Object", 20.03.2023, https://arxiv.org/abs/2303.11328 discloses changing the camera viewpoint of an object given a single RGB image.

The online resource https://huggingface.co/runwayml/stable-diffusion-inpainting discloses Stable Diffusion Inpainting.

### Technical background

Image-based object detectors are crucial building blocks for a variety of different applications. Especially in robotics, e.g., for autonomous vehicles, such object detectors are the key to inferring a virtual environment, which in turn is then used to plan actions of a robot. As actions of the robot can only be planned in the virtual environment, an error of the object detector propagates through the entire system, leading to potentially hazardous behavior.

Most object detectors are based on machine learning system. Due to aleatoric uncertainties in the input images of such object detectors, random errors will occur with non-zero probability. However, object detectors may also exhibit systematic errors. For example, an object detector may always perform worse on objects taken from a specific angle compared to its average performance.

Identifying such systematic errors is highly desirable as they are not connected to random effects in the input of the object detector but due to a systematic shortcoming. Usually, such shortcomings can be alleviated by training the object detector on more data from the class that exhibited the systematic error (in the example from above, more images of objects taken from the specific angle or a variation of angles around the specific angle).

However, finding such systematic errors is a highly non-trivial task as such errors can usually only be unmasked based on a vast amount of test images. However, manually annotating such test images is infeasible as the systematic errors can have their root in a variety of different attributes of an object (e.g., color, texture, reflectance properties, size, position, rotation). Moreover, the inventors found that when using generative methods for determining test images simply based on a text prompt suffers from insufficient attribute binding. That is, the generative methods often misunderstand which object should get an attribute desired in a text prompt. Moreover, fine-granular control of object pose does not work reliably and even on the level of "rear view" versus "side view" of an object, there are frequent confusions. This limited control over object pose makes using such generative methods for evaluating object detectors infeasible, because there is no reliable process providing control over where objects are in an image and what attributes they actually have.

Advantageously, a method with features of the independent claim 1 allows more control over single object appearance as well as object pose by replacing the single monolithic text-to-image generative model by a multi-step generation pipeline.

Having more fine-granular control over object pose allows our invention to be applied to identifying systematic errors of object detectors. For instance: an object detector not reliably detecting rear views of certain vehicle types like pickups can be identified by synthesizing different types of vehicles (semantic dimension) as well as changing their orientation. By controlling also where in an image an object will be located, the system provides ground-truth information for the object detector, both in terms of semantics (class) as well as in terms of bounding box.

This allows for assessing both the influence of individual attributes as well as combinations of attributes in an unsupervised fashion, meaning that the method can simply be provided with a vast amount of unlabeled images and still provide a meaningful evaluation concerning systematic errors of an object detector.

### Disclosure of the invention

Ina first aspect, the invention concerns a computer-implemented method for determining systematic errors of an image-based object detector comprising the steps of:
- Determining a first image of an object from a plurality of different types of objects;
- Determining edges of the object or a pose of the object;
- Determining at least one visual attribute out of a set of possible visual attributes of the object to be tested for systematic errors;
- Generating, by a generative machine learning system, a second image using the at least one visual attribute as or in a prompt of the generative machine learning system thereby generating an image of the object exhibiting the at least one visual attribute, wherein the generative machine learning system is additionally conditioned on the determined edges or the pose of the object;
- Placing the object from the second image into an image of a background scene thereby generating a third image;
- Evaluating the object detector on the third image and using the evaluation for determining systematic errors of the object detector.

In summary, the method may be understood as determining the first image of the object to be evaluated, extracting edges from the first image, selecting (or determining) at least one but preferably multiple attributes which the object should exhibit (e.g., a different color than the object currently has or a different texture), generate the image using the attribute as desired property and the edges of the object as hints, putting the object in front of a background and then evaluating the object detector on the generated image.

As the at least one visual attribute and the location of the object is known, a ground truth annotation (e.g., a bounding box) can directly be inferred and used as desired result of the object detector for the object. In particular, the detection of other objects in the third image may be disregarded only focusing on the object inserted into the third image.

The object detector may be understood as a machine learning system, especially a machine learning system comprising or consisting of a neural network and preferably pre-processing and post-processing procedures (e.g., non-maximum suppression). The object detector may especially be configured to receive the third image as input and provide an object detection as output, wherein the object detection may especially in the form of a bounding box and preferably a class of the object comprised by the bounding box. In other words, the object detector operates directly on values of the image (pixels, voxels, depth, ...).

The object detector may especially be presented in a trained form. That is, the object detector may be the result of training the object detector on a suitable set of training data.

A performance of the object detector may especially be determined with respect to miss-classifications (e.g., the object was localized correctly but assigned the wrong class) or false negatives (e.g., there was no detection of the object detector for the object inserted into the third image).

The third image may be understood as input to the object detector.

In general, an image may be understood as a measurement from an optical sensor or a result of processing such a measurement. For example, an optical sensor may record pixel values of an environment, wherein processing may then include selecting only a subset of the measurement as image and/or smoothing the measurement to determine the image and/or extract information from the measurement, i.e., determine a depth map from the measurement and using th depth map as image.

Suitable optical sensors include camera, thermal cameras, lidar sensors, radar sensors, and ultrasonic sensors.

An image may also consist of multiple different measurements, i.e., as recorded by a stereo camera. Here the image is made of two "sub-images".

Images can generally be stored in the form of three-dimensional tensors, comprising a width and height dimension along which discrete units of measurements (e.g., pixels) are located. The depth dimension can be adapted to the data to be processed. For RGB images, the depth dimension may consist of three elements for a red, green and blue channel. For stereo camera, the channels of the sub-images may be stacked along the depth dimension, wherein the depth dimension hence comprises six elements.

Determining edges may especially achieved using a Canny edge detector. For determining a pose of the object, known pose estimation methods may be used, especially methods based on neural networks.

The edges or the pose of the object may then be used as conditioning input to the generative machine learning system for guiding the generative machine learning system. Based on the guidance, the generative machine learning system determines the second image to comprise the object in a same or similar shape albeit exposing at least the one different visual attribute.

A visual attribute may in general be understood to characterize a semantic concept which influences the appearance of the object. For example, a visual attribute may characterize a color, a reflectance, a level of soiling, a level of occlusion, clothing, stickers or other elements applied to or covering the object, an age of the object, and/or a material the object or at least part of the object is made of.

The set of possible visual attributes characterizes the visual attributes which are to be checked for causing systematic erroneous behavior of the object detector. They may especially be considered as at least part of the operational design domain (ODD) of the object detector. The set of possible visual attributes can be supplied to the method at the discretion of the user.

The method may especially be run iteratively, wherein in each iteration a visual attribute or set of visual attributes is drawn preferably at random from the list of potential visual attributes.

The visual attribute is then used in an input, i.e., the prompt, of the generative machine learning system in order to determine the second image. The visual attribute may especially be used in a prompt that combines the object with the visual attribute. For example, if the object is a car and the visual attribute is the color green, then the prompt could read "a green car". Similarly, other visual attributes can be integrated into the prompt such that the second image exhibits the object according to the determined visual attributes.

The generative machine learning system is preferably a ControlNet configured to accept the edges or the pose as conditioning input. The first image may be provided as input to the generative machine learning system. Alternatively, the object may be "cut out" of the first image. This may be achieved by segmenting the object using a segmentation algorithm, e.g., Segment Anything, determining the pixels of the object. All other pixels may then be set to a uniform background, e.g., white.

Placing the object from the second image into the background image may be understood as copying the pixels characterizing the object in the second image into a location with the background image. The pixel copying may be achieved by means of segmenting the object as described above and copying all pixels belonging to the segmented object into the background image. The background image may especially be chosen to show an expectable background of the ODD of the object detector. For example, the object detector may be used in a robot such as an autonomous vehicle and the background image may be chosen to display urban, rural or highway driving scenarios.

Preferably, the object is placed into the background image by means of Stable Diffusion Inpainting. Preferably, the Stable Diffusion Inpainting model may be finetuned on images from an operational design domain of the object detector. Finetuning may preferably be achieved using LoRA.

The inventors found that using Stable Diffusion Inpainting leads to a most realistic embedding of the object into the background image.

The object detector can then be evaluated with respect to the object in the third image. That is, other objects which have been present in the background image before inserting the object obtained from the generative machine learning system may not be considered when assessing the performance of the object detector.

Evaluating the object detector may especially include computing a performance value, also referred to as "determining the performance of the object detector". The performance value may be determined according to a performance metric measuring the "goodness" of the performance of the object detector. As metric, common object detection metrics may be used, e.g., average precision, mean average precision, AP50, AP75, average recall, mean average recall, accuracy, or false negative rate.

It is also possible to inject multiple objects into the background image, i.e., using the first four steps a plurality of times for determining different objects and placing all objects into the background image.

Advantageously, the method allows for unsupervised testing of the object detector with respect to the visual attributes. That is, the method may be run on one or multiple images to determine the performance of the object detector without requiring any annotation as the annotation (i.e., visual attributes of the object, location of the object, class of the object) is known as it is being used to synthesize the third image. This annotation may hence be used to evaluate the object detector.

Determining systematic errors may also be understood as determining only a single systematic error, e.g., an error with respect to a single attribute or a single combination of attributes.

Preferably before placing the object into the image of the background, the method further comprises the step of:
- Rotating the object according to a predefined rotation and/or scaling the object according to a predefined scale before being placed into the image of the background.

The rotation and/or scaling may be considered another source of systematic errors of the object detector. For example, the object detector may perform significantly worse for objects shown from the rear or within a certain scale range.

Advantageously, this allows for evaluating even more sources for systematic errors and in turn gives a more detailed reasoning about the behavior of the object detector.

Preferably, rotating the object is achieved using the Zero-1 -to-3 method.

Advantageously, this allows for determining a three dimensional view of the object to be inserted into the background image without requiring extrinsic information about the camera that recorded the object in the first place. This allows for gathering a vast amount of 2D images showing objects while still being able to use these objects from different viewpoints in the method.

Preferably, the steps of the method are conducted multiple times, wherein for each iteration of the steps the type of object and/or the at least one visual attribute and/or the predefined rotation and/or the predefined scale and/or a position in the third image are chosen, preferably at random, and a detection performance is evaluated for each visual attribute and/or for each group of a group of rotations and/or for each group of a group of scales and/or for each group of a group positions.

Advantageously, the evaluation can then be based on a variety of different scenarios and attributes, which in turn gives a statistically more meaningful evaluation of the object detector. In other words, the result concerning systematic errors becomes even more reliable.

The influence of different types of objects, visual attributes, rotations, and scales on the detection performance of the object detector can be evaluated in terms of determining performances for different object types, visual attributes, rotations, and scales, wherein the object types, visual attributes, rotations and scales may then each be assigned a performance value that corresponds to the respective visual attribute, rotation, or scale. However, different types of attributes, rotations, and scales may be presented in terms of different data types, i.e., either in terms of discrete values (e.g., different colors) or in terms of continuous values (e.g., angles of rotations). Performance values for discrete values are straight forward to compute as one can compute a performance value for each class of the possible classes for a given attribute. For continuous values, possible values can be "discretized" into a predefined amount of bins, similar to determining a histogram. For each bin, a performance can then be evaluated. If a performance for a bin indicates a systematic error (e.g., by virtue of the performance of the bin being belong the average performance of the object detector), the range of the bin can then be presented as source for a systematic error (e.g., "the object detector performs systematically bad on objects with a z-angle of -10° to 10°").

A performance value corresponding to a type of object, visual attribute, rotation, or scale may be understood as the average performance when integrating out the remaining categories, i.e., marginalizing. For example, the performance of the object detector may be determined for all generated images that show a car (object type) and disregard other parameters of the generation (e.g., color of the car), i.e., visual attributes, rotations, and scales. This can be understood as keeping a single parameter (type of object, visual attribute, rotation, scale) fixed while varying the other parameters. Taking the average performance on such images leads to only this parameter influencing the performance (in the example above only the car is responsible for the performance evaluation while parameters such as color, rotation and scale are "integrated out").

A performance may also be considered to characterize a systematic error if a statistical test deems the performance to be significantly worse than performances determined for other attributes.

Preferably, if the object is scaled up before being placed into the image of the background, upscaling is achieved by a machine learning system, preferable a Stable Diffusion 4x.

The inventors found that advantageously, such an upscaling method provides for the third image reflecting a real image more accurately, which in term leads to a better reliability of the determined evaluation.

In another aspect, the invention concerns a computer-implemented method for training an object-detector comprising the steps of:
- Determining systematic errors of the object detector according to any embodiment of the method for determining systematic errors of the object detector;
- Training the object detector with images comprising objects exhibiting a type of object and/or visual attribute and/or rotation and/or scale and/or position, wherein the visual attribute and/or rotation and/or scale and/or position that has been evaluated to characterize a systematic error.

Advantageously, training on images exhibiting a visual attribute, rotation, and/or scale that has been considered a source of systematic error leads to a mitigation of the systematic error of the object detector.

The images used for training may either be annotated manually or annotated automatically with a known automatic annotation method.

If a visual attribute, rotation, or scale is characterized by a continuous value, the training image may comprise an attribute, rotation, or scale being taking from the bin that has been deemed to be a source of systematic error.

Embodiments of the invention will be discussed with reference to the following figures in more detail. The figures show:
- Figure 1: a method for determining systematic errors of an object detector;
- Figure 2: a training system for training the object detector;
- Figure 3: a control system comprising the object detector for controlling an actuator in its environment;
- Figure 4: the control system controlling an at least partially autonomous robot;
- Figure 5: the control system controlling a manufacturing machine.

### Description of the embodiments

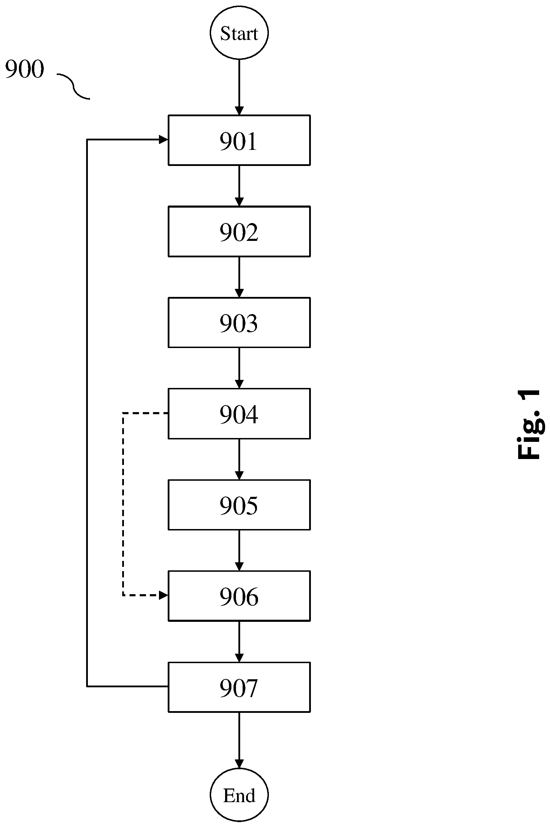

Figure 1 shows an embodiment of a computer-implemented method for determining systematic errors of an image-based object detector.

In a first step (901) a first image of an object is determined from a plurality of different types of objects. This can especially be understood as selecting a specific type of object and then selecting an image that displays the object. For this purpose, the method may access a database of images that can be assessed by the type of object that is displayed in a particular image. Alternatively, it is also possible to perform a preferably automated internet search for at least one image showing the desired object type, downloading the image and using the downloaded image as first image.

In a second step (902) edges of the object or a pose of the object are determined. A pose is preferably determined if the object is an animal or a human being. For other objects, edges are preferably determined. However, edges may also be determined for animals or human beings. Whether to determine edges or a pose for a given object type may hence be considered a hyperparameter of the method.

In a third step (903) at least one visual attribute out of a set of possible visual attributes of the object to be tested for systematic errors is determined.

In a fourth step (904) a second image is generated by a generative machine learning system using the at least one visual attribute as or in a prompt of the generative machine learning system thereby generating an image of the object exhibiting the at least one visual attribute, wherein the generative machine learning system is additionally conditioned on the determined edges or the pose of the object.

The generative machine learning system may especially be a ControlNet configured to using the edges or the pose as conditioning input. The first image may be provided as input to the generative machine learning system. Alternatively, the object may be "cut out" of the first image. This may be achieved by segmenting the object using a segmentation algorithm, e.g., Segment Anything, determining the pixels of the object. All other pixels may then be set to a uniform background, e.g., white.

Optionally, the method comprises a fifth step (905) in which the object in the image generated by the generative machine learning is rotated according to a predefined rotation and/or wherein the object is scaled according to a predefined scale before being placed into the image of the background.

In a sixth step (906) the object from the second image is placed into an image of a background scene thereby generating a third image.

It is also possible to inject multiple objects into the background image, i.e., using the first four steps (901 - 904) or the first five steps (901 - 905) a plurality of times for determining different objects and placing all objects into the background image.

In a seventh step (907) the object detector is evaluated on the third image to determine a performance of the object detector with respect to the third image.

Evaluating the object detector may especially include computing a performance value, also referred to as "determining the performance of the object detector". The performance value may be determined according to a performance metric measuring the "goodness" of the performance of the object detector. As metric, common object detection metrics may be used, e.g., average precision, mean average precision, AP50, AP75, average recall, mean average recall, accuracy or false negative rate.

The influence of different types of objects, visual attributes, rotations, and scales on the detection performance of the object detector can be evaluated in terms of determining performances for different object types, visual attributes, rotations, and scales, wherein the object types, visual attributes, rotations and scales may then each be assigned a performance value that corresponds to the respective visual attribute, rotation, or scale. Performance values for discrete values may be computed straight forward by computing a performance value for each class of the possible classes for a given attribute. For continuous values, possible values can be "discretized" into a predefined amount of bins, similar to determining a histogram. For each bin, a performance can then be evaluated.

Preferably, the steps are repeated to determine the performance for a plurality of third images. Even more preferably, the type of object to be used, the at least one visual attribute, the rotation and/or the scale of the object is chosen at random in each repetition of the steps.

The seventh step (907) may also include a final assessment of source of systematic error for a given object type, visual attribute, rotation, or scale. For example, the performance determined corresponding to a given parameter (i.e., a given object type, visual attribute, rotation, or scale) may be compared to a predefined threshold, e.g., an average performance of the object detector across all tested parameters. If the performance is worse than the predefined threshold, the corresponding parameter can be considered a source of a systematic error.

Preferably, if the object is scaled up before being placed into the image of the background, upscaling is achieved by a machine learning system, preferable a Stable Diffusion 4x.

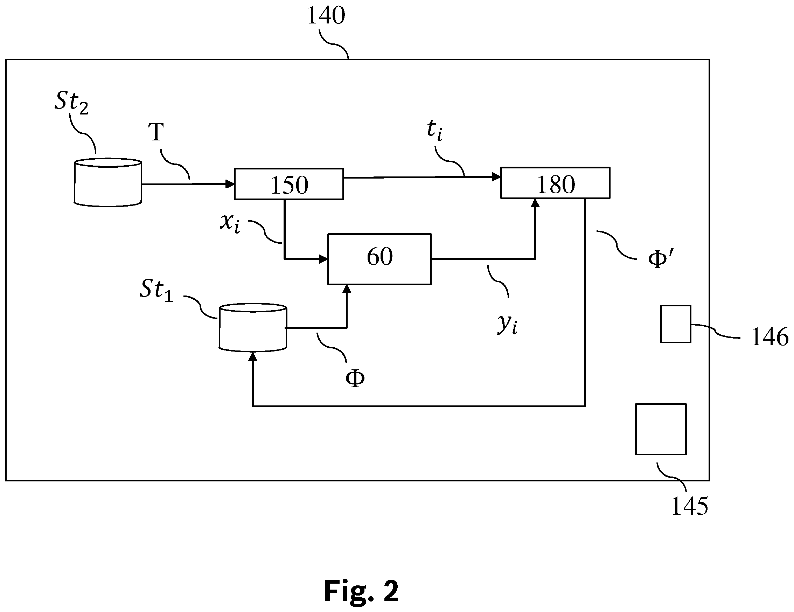

Figure 2 shows an embodiment of a training system (140) for training the object detector (60) means of a training data set (T). The training data set (T) comprises a plurality of input images (*xᵢ*) which are used for training the object detector (60), wherein the training data set (T) further comprises, for each input image (*xᵢ*), a desired output signal (*tᵢ*) which corresponds to the input image (*xᵢ*) and characterizes at least one object to be detected by the object detector (60), e.g., in form of a bounding box and preferably a class of the object. The input images (*xᵢ*) comprise a plurality of images depicting objects exhibiting a parameter (object type, visual attribute, rotation, scale) that has been deemed to be the source of a systematic error of the object detector (60). The object detector (60) may hence be understood as being present in a trained form, wherein the training system (140) finetunes the object detector (60) to mitigate systematic errors.

The object detector (60) may especially be a neural network or comprise a neural network for localizing and classifying the objects in a provided image.

For training, a training data unit (150) accesses a computer-implemented database (St₂), the database (St₂) providing the training data set (T). The training data unit (150) determines from the training data set (T) preferably randomly at least one input image (*xᵢ*) and the desired output signal (*tᵢ*) corresponding to the input image (*xᵢ*) and transmits the input image (*xᵢ*) to the object detector (60). The object detector (60) determines an output signal (*yᵢ*) based on the input image (*xᵢ*), wherein the output signal (*yᵢ*) characterizes at least one object detection. The output signal (*yᵢ*) may, for example, comprise or consist of a bounding box characterizing a location of a detected object and a classification of the detected object.

The desired output signal (*tᵢ*) and the determined output signal (*yᵢ*) are transmitted to a modification unit (180).

Based on the desired output signal (*tᵢ*) and the determined output signal (*yᵢ*), the modification unit (180) then determines new parameters (Φ') for the object detector (60). For this purpose, the modification unit (180) compares the desired output signal (*tᵢ*) and the determined output signal (*yᵢ*) using a loss function. The loss function determines a first loss value that characterizes how far the determined output signal (*yᵢ*) deviates from the desired output signal (*tᵢ*). In the given embodiment, a negative log-likelihood function is used as the loss function. Other loss functions are also conceivable in alternative embodiments.

Furthermore, it is conceivable that the determined output signal (*yᵢ*) and the desired output signal (*tᵢ*) each comprise a plurality of sub-signals, for example in the form of tensors, wherein a sub-signal of the desired output signal (*tᵢ*) corresponds to a sub-signal of the determined output signal (*yᵢ*). It is conceivable, that a first sub-signal characterizes a probability of occurrence of an object with respect to a part of the input image (*xᵢ*) and a second sub-signal characterizes the exact position of the object. If the determined output signal (*yᵢ*) and the desired output signal (*tᵢ*) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters (Φ') based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters (Φ') determined in a previous iteration are used as parameters (Φ) of the object detector (60).

Furthermore, the training system (140) may comprise at least one processor (145) and at least one machine-readable storage medium (146) containing instructions which, when executed by the processor (145), cause the training system (140) to execute a training method according to one of the aspects of the invention.

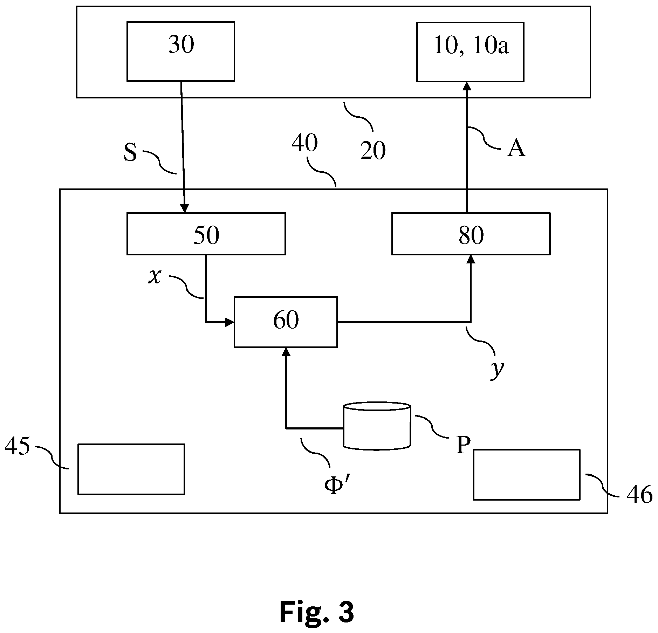

Figure 3 shows an embodiment of a control system (40) comprising the object detector (60) for controlling an actuator (10) in its environment (20). The actuator (10) and its environment (20) will be jointly called actuator system. At preferably evenly spaced points in time, an optical sensor (30) senses a condition of the actuator system. The sensor (30) may comprise several optical sensors. An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input images (*x*). Alternatively, in case of no receiving unit (50), each sensor signal (S) may directly be taken as an input image (*x*). The input image (*x*) may, for example, be given as an excerpt from the sensor signal (S). Alternatively, the sensor signal (S) may be processed to yield the input image (*x*). In other words, the input image (*x*) is provided in accordance with the sensor signal (S).

The input image (*x*) is then passed on to the object detector (60).

The object detector (60) is parametrized by parameters (Φ), which are stored in and provided by a parameter storage (*St*₁).

The object detector (60) determines an output signal (*y*) from the input signals (*x*). The output signal (*y*) comprises information that assigns object detections to the input image (*x*) or characterizes an absence of objects in the input image (*x*). The output signal (*y*) is transmitted to an optional conversion unit (80), which converts the output signal (*y*) into the control signals (A). The control signals (A) are then transmitted to the actuator (10) for controlling the actuator (10) accordingly. Alternatively, the output signal (*y*) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

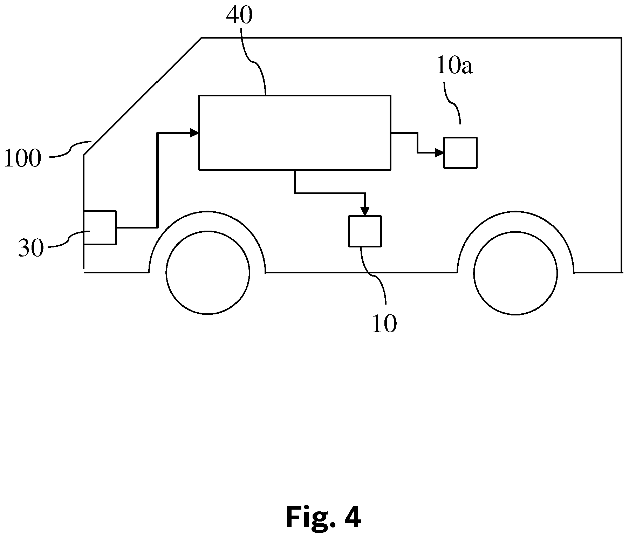

Figure 4 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100).

The object detector (60) may be configured to detect objects in the vicinity of the at least partially autonomous robot based on the input image (*x*). The output signal (*y*) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the object detector (60) deems them most likely to be, e.g., pedestrians or trees, and the control signal (A) may be determined depending on the classification.

Alternatively or additionally, the control signal (A) may also be used to control the display (10a), e.g., for displaying the objects detected by the object detector (60). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

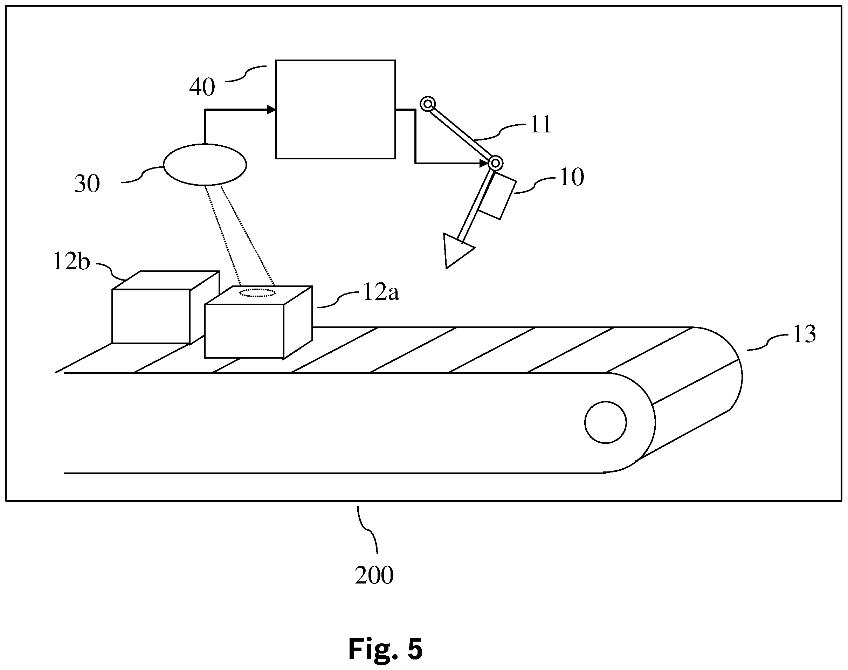

Figure 5 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12).

The object detector (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the object detector (60) classifies, whether the manufactured product is broken and/or exhibits a defect. The actuator (10) may then be controlled as to remove the manufactured product from the transportation device.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises *N* elements, wherein *N* is the number of elements in the plurality, the elements are assigned the integers from 1 to *N.* It may also be understood that elements of the plurality can be accessed by their index.

A lists of and/or combinations of different elements are especially understood as disclosing each element individually, a subset of an arbitrary combination of elements of the list or all elements.

## Claims

1. Computer-implemented method for determining systematic errors of an image-based object detector comprising the steps of:
• Determining (901) a first image of an object from a plurality of different types of objects;
• Determining (902) edges of the object or a pose of the object;
• Determining (903) at least one visual attribute out of a set of possible visual attributes of the object to be tested for systematic errors;
• Generating (904), by a generative machine learning system, a second image using the at least one visual attribute as or in a prompt of the generative machine learning system thereby generating an image of the object exhibiting the at least one visual attribute, wherein the generative machine learning system is additionally conditioned on the determined edges or the pose of the object;
• Placing (906) the object from the second image into an image of a background scene thereby generating a third image;
• Evaluating (907) the object detector on the third image and using the evaluation for determining systematic errors of the object detector.

2. Method according to claim 1, wherein before placing the object into the image of the background, the method further comprises the step of:
• Rotating (905) the object according to a predefined rotation and/or scaling the object according to a predefined scale before being placed into the image of the background.

3. Method according to claim 2, wherein rotating the object is achieved using the Zero-1-to-3 method.

4. Method according to any one of the claims 1 to 3, wherein the steps are conducted multiple times, wherein for each iteration of the steps the at least one visual attribute and/or the predefined rotation and/or the predefined scale and/or a position of the object in the third image and/or the type of object are chosen, preferably at random, and a detection performance is evaluated for each visual attribute and/or for each group of a group of rotations and/or for each group of a group of scales and/or for each group of a group positions and/or for each type of object.

5. Method according to claim 4, wherein a visual attribute and/or a group of rotations and/or a group of scales and/or a group of positions is provided as source of systematic error if a detection performance corresponding to the visual attribute and/or the group of rotations and/or the group of scales and/or the group of positions and/or the type of object is equal to or below a predefined threshold.

6. Method according to claim 5, wherein the threshold is an average detection performance of the object detector.

7. Method according to any one of the claims 1 to 6, wherein the generative machine learning system is a Control Net.

8. Method according to any one of the claims 1 to 7, wherein the object is placed into the background image by means of Stable Diffusion Inpainting.

9. Method according to any one of the claims 1 to 8, wherein determining the first image comprises segmenting the object from another image and providing the object in front of a uniform background, preferably a white background, as the first image.

10. Method according to any one of the claims 1 to 9, wherein the object is scaled up before being placed into the image of the background, wherein upscaling is achieved by a machine learning system, preferable a Stable Diffusion 4x.

11. Computer-implemented method for training an object-detector comprising the steps of:
• Determining systematic errors of the object detector according to any one of the claims 1 to 10;
• Training the object detector with images comprising objects exhibiting a visual attribute and/or rotation and/or scale and/or position and/or type of object, wherein the visual attribute and/or rotation and/or scale and/or position and/or type of object has been evaluated to characterize a systematic error.

12. Training system (140), which is configured to carry out the training method according to claim 11.

13. Control system (40), which is configured to use an object detector (60) as trained with the method according to claim 11 for determining control signal (A), wherein the control signal (A) is configured to control an actuator (10) and/or a display (10a).

14. Computer program that is configured to cause a computer to carry out the method according to any one of the claims 1 to 11 with all of its steps if the computer program is carried out by a processor (45, 145).

15. Machine-readable storage medium (46, 146) on which the computer program according to claim 14 is stored.
